# EUROPÄISCHE PATENTSCHRIFT

(11) **EP 0 312 880 B1**
(45) Veröffentlichungstag und Bekanntmachung des Hinweises auf die Patenterteilung: **07.01.1993**
(21) Anmeldenummer: 88116814.0
(22) Anmeldetag: 11.10.1988
(51) Int. Cl.: C03C 17/25

(54) **Flüssige Zubereitung zur Herstellung elektrisch leitfähiger und infrarot reflektierender fluordotierter Zinnoxidschichten auf Glas- oder Glaskeramikoberflächen**
Liquid preparations for producing electrically conducting and infrared reflecting, fluorine-doped tin oxide layers on glass or glass-ceramic surfaces
Préparation liquide pour fabriquer des couches d'oxyde d'étain électriquement conductrices et réfléchissant les infrarouges, dopées au fluor, sur des surfaces vitreuses ou vitrocéramiques

(30) Priorität: 21.10.1987 DE 3735591
(43) Veröffentlichungstag der Anmeldung: 26.04.1989
(73) Patentinhaber: Th. Goldschmidt AG, 45127 Essen (DE)
(72) Erfinder: Ruf, Erich, Dr., D-4300 Essen (DE)

(56) Entgegenhaltungen:
- US-A- 2 566 346

## Beschreibung

Die Erfindung betrifft eine flüssige Zubereitung zur Herstellung von elektrisch leitfähigen und infrarot reflektierenden fluordotierten Zinnoxidschichten auf Glas- oder Glaskeramikoberflächen mit einem Gehalt an gegebenenfalls organische Gruppen aufweisenden Zinn-IV-chloriden.

Es ist bekannt, daß fluordotierte Zinnoxidschichten auf Glasoberflächen den elektrischen Widerstand der vergüteten Oberflächen herabsetzen und die Infrarotreflexion erhöhen. Zur Herstellung dieser Zinnoxidoberflächenschichten bringt man eine geeignete Zinnverbindung gleichzeitig mit einer Fluor abgebenden Verbindung in Kontakt mit der auf Temperaturen von 400 bis 800°C Oberfläche. Die Zinnverbindung (Basisverbindung) bildet auf der Oberfläche des Glases oder der Glaskeramik eine zusammenhängende Schicht aus Zinnoxid. Die Fluor abgebende Verbindung (Dotierungsmittel) bewirkt eine Dotierung der entstehenden oder erhaltenen Zinnoxidschicht mit Fluor. Diese Dotierung ist für die Ausbildung der gewünschten Eigenschaften wie Leitfähigkeit und Infrarotreflexion von entscheidender Bedeutung.

Das Verfahren zur Herstellung dieser fluordotierten Zinnoxidschichten auf geeigneten Oberflächen kann in verschiedener Weise durchgeführt werden. Man kann die zinn- und fluorenthaltenden Verbindungen aus der Gasphase auf die zu vergütende Oberfläche einwirken lassen oder die Oberfläche mit einem Gasstrom, der die Verbindungen in Form eines feinen Pulvers enthält, beaufschlagen. Verfahrenstechnisch ist das Aufsprühen von Lösungen dieser Verbindungen in einem geeigneten Lösungsmittel besonders einfach durchzuführen.

Zu diesem Stand der Technik gibt es eine umfangreiche Patentliteratur, aus der stellvertretend die folgenden Offenlegungs- oder Patentschriften genannt werden sollen:
Aus der DE-PS 10 077 ist ein Verfahren zum Aufbringen einer Infrarotstrahlen reflektierenden Schicht aus einem mit einem Halogen, vorzugsweise mit Fluor, dotierten Zinnoxid durch Pyrolyse auf eine Glasoberfläche, bei dem auf die eine Temperatur von 400 bis 650°C aufweisende Glasoberfläche eine organische Zinnverbindung (Basisverbindung) in Pulverform mit einer Teilchengröße von weniger als 20 µm als Suspension in einem gasförmigen Trägerstrom in Gegenwart einer Halogenverbindung (Dotierungsmittel) aufgebracht wird, wobei als Halogenverbindung (Dotierungsmittel) eine pulverförmige Verbindung verwendet wird, die in dem gasförmigen Trägerstrom für die Zinnverbindung (Basisverbindung) suspendiert ist. Beispiel einer Basisverbindung ist Dibutylzinnoxid, während als Dotierungsmittel Dibutylzinndifluorid genannt wird. Basisverbindung und Dotierungsmittel können auch in einer en Verbindung wie z.B. Ammoniumdibutylzinntetrafluorid verwirklicht sein. Es hat sich jedoch gezeigt, daß die reproduzierbare Ausbildung eines gleichmäßigen Stromes von Trägergas und pulverförmigen Verbindungen nur schwierig zu gewährleisten ist, so daß Oberflächenschichten mit stets wechselnden Eigenschaften erhalten werden.

Aus der DE-PS 28 06 468 ist ein Verfahren bekannt, bei dem als Basisverbindung Dibutylzinnoxid in Form eines Pulvers in einem wasserfreien Luftstrom dispergiert verwendet wird, während das Dotierungsmittel eine gasförmige Fluorverbindung ist, die der Dispersion kurz vor Erreichen der Austrittsdüse zugemischt wird. Als gasförmige Fluorverbindungen werden wasserfreier Fluorwasserstoff, BF₂, BrF₅, ClF₃, SiF₄, WF₆ und MoF₆ genannt. Bei diesen gasförmigen Fluorverbindungen besteht die Gefahr der Verätzung der Oberfläche des zu vergütenden Glases oder der Glaskeramik, Außerdem sind bei Verwendung dieser chemisch aggressiven und toxischen Gase umfangreiche Sicherheitsvorkehrungen zu treffen.

Das Aufbringen geeigneter Zinnverbindungen und Dotierungsmittel aus der Gasphase kann der EU-OS 0 112 780 entnommen werden. Bei diesem Verfahren wird eine gasförmige Mischung von Butylzinntrichlorid (Basisverbindung) und Dichlordifluormethan (dotierungsmittel) verwendet. Auch hier treten Dosierungsprobleme, die zu Oberflächen ungleicher und unzureichender Eigenschaften führen, auf. Außerdem ist die Verwendung von Dichlordifluormethan aus Umweltgründen unerwünscht.

In der US-PS 4 293 594 ist ein Verfahren offenbart, bei dem man eine gasförmige Mischung von Dimethylzinndichlorid und Dimethylzinndifluorid in einem Trägergas auf die zu vergütenden Oberflächen aufbringt. Diese Verbindungen sind jedoch fest und lassen nur bei hohen Temperaturen in die Gasphase überführen.

Eine flüssige Zubereitung zur Herstellung hochwertiger, fluordotierter Zinnoxidschichten auf Glasoberflächen kann der EU-OS 0 158 399 entnommen werden. Die Zubereitung besteht aus
- a) 1 - 30 Gew.-%: eines Dotierungsmittels auf der Basis einer organischen Fluorverbindung, ausgewählt aus Trifluoressigsäure oder deren Anhydrid, Trifluorethanol und Pentafluorpropionsäure, und
- b) 70 - 99 Gew.-%: einer Organozinnverbindung, ausgewählt aus Alkylzinntrichlorid, Dialkylzinndichlorid, Alkyldichlorzinnacetat, Alkylchlorzinndiacetat, einem Ester des Zinnchlorids oder Zinntetrachlorid.

Auch dieses Verfahren kann noch nicht befriedigen, da die fluorhaltigen Dotierungsmittel in der Mehrzahl niedrig siedende Flüssigkeiten darstellen, daher an der heißen Glasoberfläche größtenteils verdampfen und deshalb nicht in die Zinnoxidschicht eingebaut werden. Bedingt durch die Verdampfungswärme dieser Dotierungsmittel wird die heiße Substratoberfläche relativ stark abgekühlt. Dies führt zu einer Verschlechterung der Eigenschaften der aufgebrachten Schicht.

Im Falle der Pentafluorpropionsäure erfolgt die Zersetzung an der heißen Glasoberfläche nicht schnell genug, so daß auch hier die Zinnoxidschicht ungenügende Funktionswerte aufweist. Hinzu kommt, daß diese Verbindungen sehr teuer und gesundheitsgefährdend sind.

Der vorliegenden Erfindung liegt die Aufgabe zugrunde, Lösungen von Zinnverbindung als Basisverbindungen und fluorenthaltenden Dotierungsmitteln zu finden, welche verfahrenstechnisch einfach zu handhaben und deren wirksame Bestandteile leicht zugängliche und möglichst billige Chemikalien sind und welche insbesondere die Herstellung von Oberflächenschichten auf Glas oder Glaskeramik mit möglichst niedrigem Flächenwiderstand gestatten.

Diese Eigenschaften konnten überraschenderweise bei einer Zubereitung gefunden werden, welche durch Auflösen von
- 27,5 bis 89,5 Gew.-%: gegebenenfalls organische Gruppen aufweisenden Zinn-IV-chloriden und
- 0,5 bis 5,0 Gew.-%: Zinn-II-fluorosilikat in Form einer wäßrigen 30 bis 50 gew.-%igen Lösung in
- 10 bis 67,5 Gew.-%: eines polaren organischen Lösungsmittels
und gegebenenfalls Abfiltrieren der ausgefällten Kieselsäure hergestellt worden ist.

Zinn-II-fluorosilikat entspricht der Formel Sn[SiF₆].

Dies war insbesondere deshalb überraschend, da aus der US-PS 2 566 346 bekannt ist, daß bei Einsatz von Lösungen, die anorganische und/oder organische Zinn-IV-chloride als Basisverbindungen und Antimonfluoride als Dotierungsmittel enthalten, im Sprühzerstäubungsverfahren auf die Oberfläche von Gläsern aufgebracht, Zinnoxidschichten entstehen, die keine nennenswerten Infrarotreflexions- bzw. keine niedrigen Flächenwiderstandswerte aufweisen.

Hinzu kommt ferner, daß wäßrige bzw. wäßrig alkoholische Zinnfluorosilikatlösungen allein, also ohne zusätzliche Anwesenheit der gegebenenfalls organische Gruppen aufweisenden Zinn-IV-chloride sich an der heißen Glasoberfläche schlecht zersetzen, wobei sich auf der Substratoberfläche störende Zersetzungsrückstände aufbauen. Man erhält keine brauchbaren Funktionsschichten.

Geeignete Basisverbindungen sind neben Zinntetrachlorid Alkylzinntrichlorid, Dialkylzinndichlorid, Dialkylchlorzinnacetate, Alkylchlorzinndiacetat, wobei der Alkylrest jeweils ein Rest mit 1 bis 6, insbesondere 4 Kohlenstoffatomen und bevorzugt der n-Butylrest ist.

Besonders bevorzugt ist deshalb eine erfindungsgemäße Zubereitung, welche durch Auflösen von
- 30 bis 89,5 Gew.-%: Zinntetrachlorid oder Alkylzinntrichlorid und
- 0,5 bis 2,5 Gew.-%: Zinn-II-fluorosilikat in Form einer wäßrigen 30 bis 50 Gew.-%igen Lösung in
- 10 bis 67,5 Gew.-%: eines polaren organischen Lösungsmittels
hergestellt worden ist.

Als polare organische Lösungsmittel kommen niedere aliphatische Alkohole, insbesondere Ethanol und niedrig siedende Ester, insbesondere Essigsäureethylester oder Ketone wie Methylisobutylketon in Frage.

Insbesondere bevorzugt ist deshalb eine Zubereitung, welche durch Auflösen von
- 30 bis 89,5 Gew.-%: Zinntetrachlorid oder Butylzinntrichlorid und
- 0,5 bis 2,5 Gew.-%: Zinn-II-fluorosilikat in Form einer wäßrigen 30 bis 50 Gew.-%igen Lösung in
- 10 bis 67,5 Gew.-%: Ethanol und/oder Essigsäureethylester
hergestellt worden ist.

Wird bei der Herstellung Zubereitungen die wäßrige Zinn-II-fluorosilikatlösung zur Lösung von Zinn-IV-chlorid, welches gegebenenfalls organische Gruppen enthalten kann, in einem organischen Lösungsmittel wie Ethanol gegeben, fällt, teilweise nach vorheriger Gelbildung, Kieselsäure aus. Diese ausgefallene Kieselsäure beeinträchtigt jedoch nicht die Verwendung der Zubereitungen zur Oberflächenvergütung. Gleichgültig, ob die ausgefallene Kieselsäure abfiltriert und die so erhaltene klare Lösung auf die Substratoberfläche aufgebracht wird oder ob die Zubereitung mit der in ihr suspendierten Kieselsäure auf die Substratoberfläche aufgesprüht wird, werden in beiden Fällen für die Infrarotreflexion und den Flächenwiderstand praktisch gleiche Werte erhalten.

Die erfindungsgemäße Zubereitung wird zweckmäßig mit einer Sprühpistole im Sprühzerstäubungsverfahren unter Verwendung von Preßluft auf das erhitzte Substrat, insbesondere Glas, aufgetragen. Das Substrat soll dabei eine Temperatur von 400 bis 800°C haben. Die Temperatur des Substrates muß jedoch unterhalb seiner jeweiligen Schmelz- bzw. Erweichungstemperatur liegen.

Durch Pyrolyse wird auf Substratoberfläche ein mit Fluor dotierter Zinnoxidfilm erzeugt. Dieser Film hat die Eigenschaften einer Halbleiterschicht. Je nach angewendeten Mengen der erfindungsgemäßen Zubereitung wird ein Film mit einer Schichtdicke von 100 bis 100 nm erhalten. Entsprechend dem erfindungsgemäßen Verfahren sind daher auf Glas selektive Transparentsbeschichtungen herstellbar, die für das sichtbare Licht weitgehend (75 bis 83 %) durchlässig sind, während Infrarotstrahlen oberhalb ca. 2500 nm Wellenlänge je nach Schichtdicke zu 80 bis 90 % reflektiert werden.

Die nachfolgenden Beispiele dienen der weiteren Erläuterung der Erfindung.

### Beispiel 1 a

In eine 100-ml-Glasflasche, die mit Magnetrührer versehen ist, werden

| | |
|---|---|
| 27,4 g | Ethylalkohol, |
| 70,0 g | Butylzinntrichlorid und |
| 2,6 g | einer 44,8 gew.-%igen wäßrigen Zinn-II-fluorosilikatlösung |

gegeben und unter Rühren und Kühlen gemischt. Hierbei fällt Kieselsäure aus.

5 ml dieser Lösung werden in den Becher einer Sprühpistole (Düsendurchmesser 1 mm; Sprühdruck 4 bar) gefüllt und auf eine Flachglasscheibe (160 x 180 x 6 mm), die zuvor in einem Ofen 5 Minuten lang bei 700°C Ofentemperatur aufgeheizt worden war, versprüht. Nach dem Erkalten weist die Glasscheibe folgende Werte auf:

| | |
|---|---|
| Schichtdicke: | 500 nm |
| Infrarotreflexion: | 89,0 % |
| Flächenwiderstand: | 6,0 Ohm/Quadrat |

### Beispiel 1 b

Das Verfahren des Beispiels 1 a wird mit der Abänderung wiederholt, daß eine klar filtrierte und von der ausgefallenen Kieselsäure befreite Zubereitung verwendet wird. Es werden folgende Werte gemessen:

| | |
|---|---|
| Schichtdicke: | 500 nm |
| Infrarotreflexion: | 90,0 % |
| Flächenwiderstand: | 7,0 Ohm/Quadrat |

### Beispiel 2

In eine 100-ml-Glasflasche, die mit Magnetrührer versehen ist, werden

| | |
|---|---|
| 51,7 g | Ethanol, |
| 45,8 g | SnCl₄ und |
| 2,5 g | einer 44,6 gew.-%igen wäßrigen Zinn-II-fluorosilikatlösung |

gegeben und unter Rühren und Kühlen 2 Stunden gemischt. In der so erhaltenen Lösung tritt bei längerem Stehen eine Gelbildung auf, wobei nach und nach Kieselsäure ausfällt.

5 ml der frisch hergestellten Lösung werden unmittelbar, ohne eine Filtration vorzunehmen, zur Vergütung einer Glasoberfläche entsprechend Beispiel 1 a verwendet. Nach dem Erkalten weist die Glasscheibe folgende Werte auf:

| | |
|---|---|
| Schichtdicke: | 450 nm |
| Infrarotreflexion: | 87,0 % |
| Flächenwiderstand: | 17 Ohm/Quadrat |

## Patentansprüche

1. Flüssige Zubereitung zur Herstellung von elektrisch leitfähigen und infrarot reflektierenden fluordotierten Zinnoxidschichten auf Glas- oder Glaskeramikoberflächen mit einem Gehalt an Zinn-IV-chloriden, welche organische Gruppen aufweisen können, dadurch gekennzeichnet, daß sie durch Auflösen von
30 bis 89,5 Gew.-% Zinntetrachlorid oder Alkylzinntrichlorid und
0,5 bis 2,5 Gew.-% Zinn-II-fluorosilikat in Form einer wäßrigen 30 bis 50 gew.-%igen Lösung in
10 bis 67,5 Gew.-% eines polaren organischen Lösungsmittels
hergestellt worden ist.

2. Zubereitung nach Anspruch 1, dadurch gekennzeichnet, daß sie durch Auflösen von
30 bis 89,5 Gew.-% Zinntetrachlorid oder Butylzinntrichlorid und
0,5 bis 2,5 Gew.-% Zinn-II-fluorosilikat in Form einer wäßrigen 30 bis 50 gew.-%igen Lösung in
10 bis 67,5 Gew.-% Ethanol und/oder Essigsäureethylester
hergestellt worden ist.

## Claims

1. Liquid composition for the production of electro-conductive, infrared-reflective, fluorine-doped tin oxide layers on glass or glass-ceramic surfaces, which contains tin(IV) chlorides, which may contain organic groups, characterised in that it has been prepared by dissolving
from 30 to 89.5 % by weight of tin tetrachloride or an alkyltin trichloride and
from 0.5 to 2.5 % by weight of tin(II) fluorosilicate in the form of an aqueous, from 30 to 50 % strength by weight solution in
from 10 to 67.5 % by weight of a polar organic solvent.

2. Composition according to Claim 1, characterised in that it has been prepared by dissolving
from 30 to 89.5 % by weight of tin tetrachloride or butyltin trichloride and
from 0.5 to 2.5 % by weight of tin(II) fluorosilicate in the form of an aqueous, from 30 to 50 % strength by weight solution, in
from 10 to 67.5 % by weight of ethanol and/or ethyl acetate.

## Revendications

1. Préparation liquide pour la fabrication de couches d'oxyde d'étain dopées au fluor, électroconductrices et réfléchissant les infrarouges, sur des surfaces de verre ou de vitrocéramique, contenant des chlorures d'étain-IV qui peuvent contenir des groupes organiques, caractérisée en ce qu,on l'obtient en dissolvant :
30 à 89,5 % en poids de tétrachlorure d'étain ou de trichlorure d'alcoylétain, et
0,5 à 2,5 % en poids de fluorosilicate d'étain-II sous la forme d'une solution aqueuse à 30 à 50 % en poids, dans
10 à 67,5 % en poids d'un solvant organique polaire.

2. Préparation selon la revendication 1, caractérisée en ce qu'on l'obtient en dissolvant :
30 à 89,5 % en poids de tétrachlorure d'étain ou de trichlorure de butylétain, et
0,5 à 2,5 % en poids de fluorosilicate d'étain-II sous la forme d'une solution aqueuse à 30 à 50 % en poids, dans
10 à 67,5 % en poids d'éthanol et/ou d'ester éthylique de l'acide acétique.
